# EUROPEAN PATENT APPLICATION

(11) **EP 2 362 247 A2**
(43) Date of publication of application: **31.08.2011**
(21) Application number: 11152323.9
(22) Date of filing: 27.01.2011
(51) Int. Cl.: G02B 5/20, G02F 1/1335

(54) **Black matrix, manufacturing method thereof, and image display apparatus using the same**

(30) Priority: 18.02.2010 JP 2010033140
(71) Applicant: Canon Kabushiki Kaisha, Tokyo 146-8501 (JP)
(72) Inventor: Hashimoto, Takeshi, Tokyo 146-8501 (JP); Ito, Junji, Tokyo 146-8501 (JP)
(74) Representative: TBK

(57) **Abstract**

A black matrix formed on a substrate includes four layers formed by stacking a first film(1), a second film(2), a third film(3), and a fourth film(4) in this order, each film being made of a transition metal oxide and a silicon oxide. A relationship of refractive index of the first film=refractive index of the third film<refractive index of the second film=refractive index of the fourth film is set, the fourth film is a multilayer film, with each layer being identical in composition to each other, and a boundary is recognized within the fourth film when seen on a TEM picture.

## Description

### BACKGROUND OF THE INVENTION

### Field of the Invention

The present invention relates to a black matrix that is a light shielding member of a flat panel display (FPD), a manufacturing method thereof, and an image display apparatus using the same.

### Description of the Related Art

A light shielding film used for a substrate (face plate) of a display apparatus having a light-emitting surface such as a plasma display, a liquid crystal display or a field emission display (FED) is referred to as a black matrix, and formed on a glass substrate to improve contrast or prevent mixed color.

The most important characteristic of the black matrix is the optical characteristic. Preventing mixed color necessitates sufficient shielding of light. In other words, high light shielding performance must be provided. To improve contrast of a displayed image by reducing projection of an external light source when seen from a display side, a reflectance ratio must be set low. To improve light shielding performance while reducing a reflectance ratio, a method has conventionally been employed where a thin film having a light shielding function and a thin film having a light reflection preventing function constitute a black matrix. Japanese
Patent Application Laid-Open No. 2000-214308 discusses a black matrix configured by stacking a plurality of layers and including an optical interference layer where optical interference effects reduce a reflectance ratio, and a light shielding layer where a metal film high in reflectance ratio but low in light transmittance reduces a transmittance. Japanese Patent Application Laid-Open No. 10-239679 discuses a multilayer film configuration where Cr and CrO are repeated so that an optical interference layer includes a light shielding effect.

The black matrix is disposed on the glass substrate or a substrate on which a transparent conductive film is formed, and hence process resistance is required in a face plate manufacturing process after the formation of the black matrix. Thermal resistance is particularly important since the manufacturing process of the plasma display or the FED includes baking process. Japanese Patent Application Laid-Open No. 08-271880 discusses prevention of deterioration of optical characteristics of the black matrix in regard to a high-temperature process. A light shielding film is formed where metal fine particles are dispersed in an insulator. The holding of the metal particles in the insulator suppresses deterioration of the optical characteristics during the high-temperature process.

According to the conventional art, the black matrix that includes the optical interference layer and the light shielding layer is formed by sputtering. The optical interference layer includes a plurality of films and is configured to suppress the reflectance ratio using optical
interferences. Therefore precision of refractive index and thickness of a film are important. Generally, however, a film thickness distribution is about ±7 to 10% in the sputtering method. Thus, it is a problem that the optical interference effects are not uniform within the substrate surface, causing distribution of the reflectance ratio of the black matrix and increase of the reflectance ratio in some locations. The thin film such as a metal film having no thermal resistance is used for the light shielding layer. When metal fine particles are dispersed in an insulator as in the case of Japanese Patent Application Laid-Open No. 08-271880, light shielding
performance is maintained after the baking process. However, because it includes no light reflection layer, it is difficult to reduce the reflectance ratio equal to or lower than a reflectance ratio determined by refractive index of the insulator layer and the substrate.

### SUMMARY OF THE INVENTION

The present invention in its first aspect provides an black matrix as specified in claims 1 to 4.
The present invention in its second aspect provides a method for manufacturing the black matrix as specified in claims 5 to 7.
The present invention in its third aspect provides an image display apparatus as specified in claims 8.

Further features and aspects of the present invention will become apparent from the following detailed description of exemplary embodiments with reference to the attached drawings.

### BRIEF DESCRIPTION OF THE DRAWINGS

The accompanying drawings, which are incorporated in and constitute a part of the specification, illustrate exemplary embodiments, features, and aspects of the invention and, together with the description, serve to explain the principles of the invention.

Figs. 1A and 1B illustrate an exemplary embodiment of a film configuration of a black matrix according to the present invention.

Figs. 2A to 2C illustrate a specular reflectance ratio of the black matrix according to the present invention.

Figs. 3A and 3B are schematic sectional views each illustrating a light shielding film of the black matrix according to the present invention.

Fig. 4 illustrates relationships between diffuse reflectance ratios and wavelengths in a multilayer light shielding film and a single layer light shielding film.

Fig. 5 illustrates a refractive index and an extinction coefficient of the light shielding film of the black matrix according to the present invention.

Fig. 6 illustrates an overall outline of an exemplary embodiment of an image display apparatus according to the present invention.

### DESCRIPTION OF THE EMBODIMENTS

Various exemplary embodiments, features, and aspects of the invention will be described in detail below with reference to the drawings.

The present invention is directed to a black matrix that can realize a low reflectance ratio and high light shielding performance within an entire substrate surface without deteriorating optical characteristics even after a high-temperature process such as baking, a manufacturing method thereof, and an image display apparatus using the same.

According to the present invention, a black matrix can be provided, which has low reflectance ratio
characteristics and excellent light shielding performance even after the high-temperature process while there is variance on film thickness. An image display apparatus using the black matrix is limited in projection on a display surface, and can provide good images of high contrast.

The image display apparatus using the black matrix according to the present invention includes a liquid crystal display, a plasma display, a field emission display (FED), or an electron luminescent display (ELD). A process of manufacturing the plasma display or the FED represented by a surface-conduction electron-emitter display (SED) includes high-temperature processing. Thus, effects of the present invention can be easily provided.

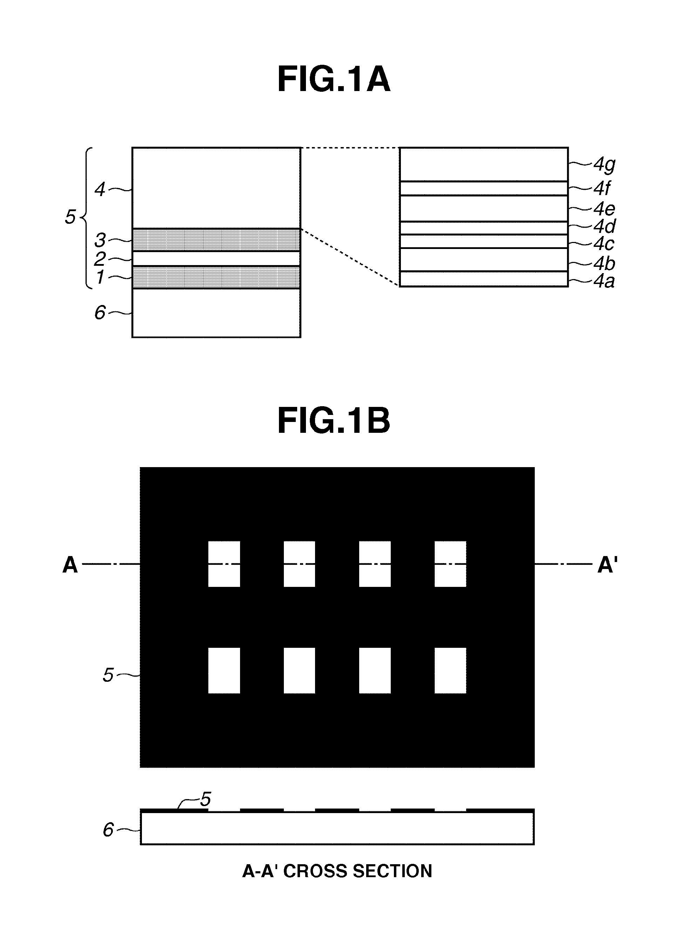

Figs. 1A and 1B illustrate a film configuration of the black matrix according to the present invention: Fig. 1A is a sectional view, and Fig. 1B illustrates an upper surface and a sectional view along the line A-A'. A glass substrate 6 can be a glass substrate generally used for the liquid crystal display or the plasma display. For example, a PD200 (by ASAHI GLASS CO., LTD.) can be used as it has a high strain point and resistance to the high-temperature process.

The black matrix 5 includes four films formed on the glass substrate 6 by sputtering. The four films are first to fourth films 1 to 4 sequentially stacked in this order. The first film 1 is formed by mixing a transition metal oxide and a silicon oxide. The second film 2 is formed by mixing a transition metal oxide and a silicon oxide at a mixing ratio (mol %) different from that of the first film 1. The third film 3 is formed by mixing a transition metal oxide and a silicon oxide at the same mixing ratio (mol %) as that of the first film
1. The fourth film 4 is formed by mixing a transition metal oxide and a silicon oxide at the same mixing ratio (mol %) as that of the second film 2. As a target, a sintered body of a transition metal oxide and a silicon oxide can be used. This
configuration is advantageous in terms of production because the black matrix can be formed by two sintered body targets different in mixing ratio of a transition metal oxide and a silicon oxide even though the film configuration is
four-layered. A sputtering atmosphere can be Ar or a mixed atmosphere of Ar and oxygen.

In Figs. 1A and 1B, the first film 1 and the third film 3 are formed under the same deposition conditions except deposition time. The second film 2 and the fourth film 4 are formed under the same conditions except deposition time. The first film 1 and the third film 3 can be dissimilar in thickness. The second film 2 and the fourth film 4 can be dissimilar in thickness. Since the formed films include oxides, no oxidation occurs different from a case of a metal, and thus characteristics such as a reflectance ratio are not deteriorated even after the high-temperature process. As the transition metal, cobalt, manganese, iron, or nickel can be used since such a metal is almost black and blocks visible light. The silicon oxide is mixed because the film is low in strength and brittle if only the transition metal oxide is used, and for the purpose of controlling a refractive index.

As a patterning method of the black matrix 5, for example, there is a method that forms the black matrix 5 on the glass substrate 6, and then patterns a resist by wet etching. There is also a lift-off method that patterns a resist, and then deposits the black matrix 5 to peel off the resist.

The black matrix 5 can also be acquired by performing sputtering in an oxygen mixed atmosphere using a target of a silicide that is an alloy of a transition metal and silicon. The first to fourth films 1 to 4 can be formed using a transition metal oxide and a silicon oxide as separate targets, and simultaneously or alternately sputtering the two targets. When the two targets are simultaneously sputtered, a mixing ratio of the transition metal oxide and the silicon oxide can be adjusted by energy (W/cm²) applied to each target, and the energy applied to the target larger in mixing ratio is set larger.

When the two targets are alternately sputtered, since a mixing ratio of the transition metal oxide and the silicon oxide is determined based on a thickness ratio of a film formed from each target, by setting longer a deposition period of time of the target larger in mixing ratio, the mixing ratio of the transition metal oxide and the silicon oxide can be adjusted. By setting larger energy applied to the target larger in mixing ratio while deposition periods of time are equal, the mixing ratio of the transition metal oxide and the silicon oxide can be adjusted. After the formation of the black matrix 5, a light-emitting member is applied on an opening of the black matrix 5 in subsequent step.

A relationship between a refractive index n1 of the first film 1 and a refractive index n2 of the second film 2 may be set to n1<n2 to realize a low reflectance ratio. The refractive index can be adjusted based on a composition ratio of a transition metal and silicon in the film. The higher the refractive index, the larger the transition metal in ratio. According to one aspect, the relationship of n1<n2 may be set, n1 may be 1.6 or more to 2.1 or less, and n2 may be 2.1 or more.

When the transition metal is cobalt, the above described refractive index is achieved if a composition ratio of the transition metal to all metal elements in the film is composition ratio of first film 1<composition ratio of second film 2, about 10 mol% or more to 60 mol% or less in the first film 1, and about 60 mol% or more in the second film 2. In the case of manganese, the above described refractive index is achieved if the composition ratio is composition ratio of first film 1<composition ratio of second film 2, about 10 mol% or more to 30 mol% or less in the first film 1, and about 30 mol% or more in the second film 2. In the case of iron, the above described refractive index is achieved if the composition ratio is composition ratio of first film 1<composition ratio of second film 2, about 10 mol% or more to 60 mol% or less in the first film 1, and about 60 mol% or more in the second film 2. In the case of nickel, the above described refractive index is achieved if the composition ratio is composition ratio of first film 1<composition ratio of second film 2, about 10 mol% or more to 90 mol% or less in the first film 1, and 90 mol% or more in the second film 2. However, the composition ratios to achieve the refractive indexes for the four metals may slightly vary depending on film forming conditions. In this case the refractive index is a real part of a complex refractive index. Since a value of the refractive index varies depending on wavelength of visible light, each of the abovementioned values is indicated corresponding to a value at wavelength of 550 nanometers.

The black matrix 5 illustrated in Figs. 1A and 1B includes three optical interference films and one light shielding film. Regarding types of films, two types of refractive indexes are combined, and the optical interference film itself exhibits light shielding performance. In many cases, the optical interference film is generally designed based on a configuration of three layers having a low refractive index, a high refractive index, and a low refractive index or a high refractive index, a low refractive index, and a high refractive index. This is a method for acquiring an optimal value of only a specific wavelength. An optimal configuration may be acquired by experiment because it can be difficult to make an estimation in all visible light range, or there may not be any materials that can be set to the values demanded from designing.

The inventors have conducted studies in view of use of the transition metal oxide having thermal resistance, control of the refractive index based on the transition metal oxide and the silicon oxide, low reflectance ratios in all the visible light range, stable reflectance ratio characteristics with respect to variance on film thickness, and sufficient light shielding performance of the high refractive index film. As a result, the film configuration of the present invention was invented. In other words, the configuration of the substrate, the low refractive index film, the high refractive index film, and the low refractive index film is employed. The relationship of refractive index of the low refractive index film<refractive index of high refractive index film is set. The low refractive index film has a refractive index of 1.6 or more to 2.1 or less. The high refractive index has a refractive index of 2.1 or more. The light shielding film has a refractive index equal to that of the high refractive index film.

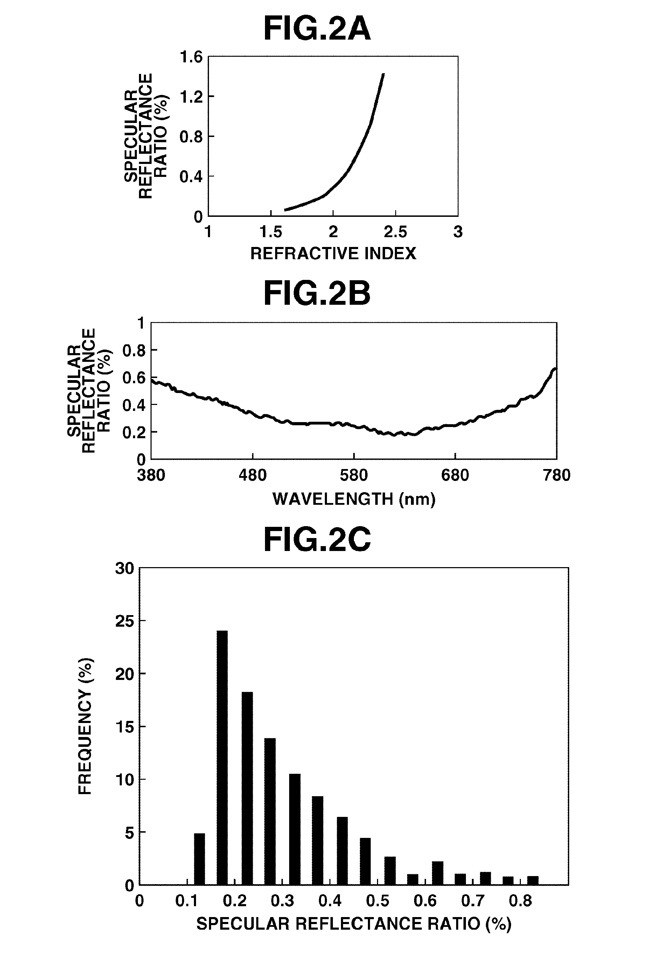

Fig. 2A illustrates an example of a relationship between a specular reflectance ratio and a refractive index of the black matrix according to the present invention. Reflection includes a specular reflection component and a diffuse reflection component. Specular reflection indicates the specular reflection component. Fig. 2A illustrates a change in specular reflectance ratio with respect to refractive indexes of the low refractive index films (film 1 and film 3) when a refractive index of the high refractive index film (film 2) is 2.1 or more. The specular reflectance ratio becomes larger as the refractive index increases. In this case the specular reflectance ratio is indicated with a value at the wavelength of 550 nanometers. To limit the specular reflectance ratios to 1% or less in all the visible light range, the refractive indexes of the low refractive index films (film 1 and film 3) must be set to 2.1 or less. It is difficult to set a refractive index to 1.6 or less in the film including the transition metal oxide and the silicon oxide. The high refractive index film (film 2) needs a refractive index larger than those of the low refractive index films (film 1 and film 3) . A large refractive index can be set for the light shielding film (film 4), and refractive indexes of 2.1 or more can be set for the high refractive films (film 2 and film 4).

A film thickness of each of the films 1 to 4 is determined by optically calculating a center value among film thicknesses based on the refractive indexes of the films. This determination of the film thickness enables realization of a low reflectance ratio within the surface even when the film thickness varies. For example, the film thickness of the optical interference film varies depending on the refractive index, accordingly a film thickness of each layer can be set so that a specular reflectance ratio can be smallest at the wavelength of 550 nanometers. According to the film configuration of the present invention, specular reflectance ratios are low in all the visible light ranges, and difficult to change with respect to variability of film thickness. Fig. 2B illustrates a specular reflectance ratio spectrum when the black matrix 5 is formed using a cobalt oxide as the transition metal oxide. Specular reflectance ratios are low in all of the visible light range. Fig. 2C illustrates a frequency of a specular reflectance ratio when variability up to ±10% is provided to each film. A specular reflectance ratio value smaller than an average value among specular reflectance ratios appears the most frequently, indicating limited variance.

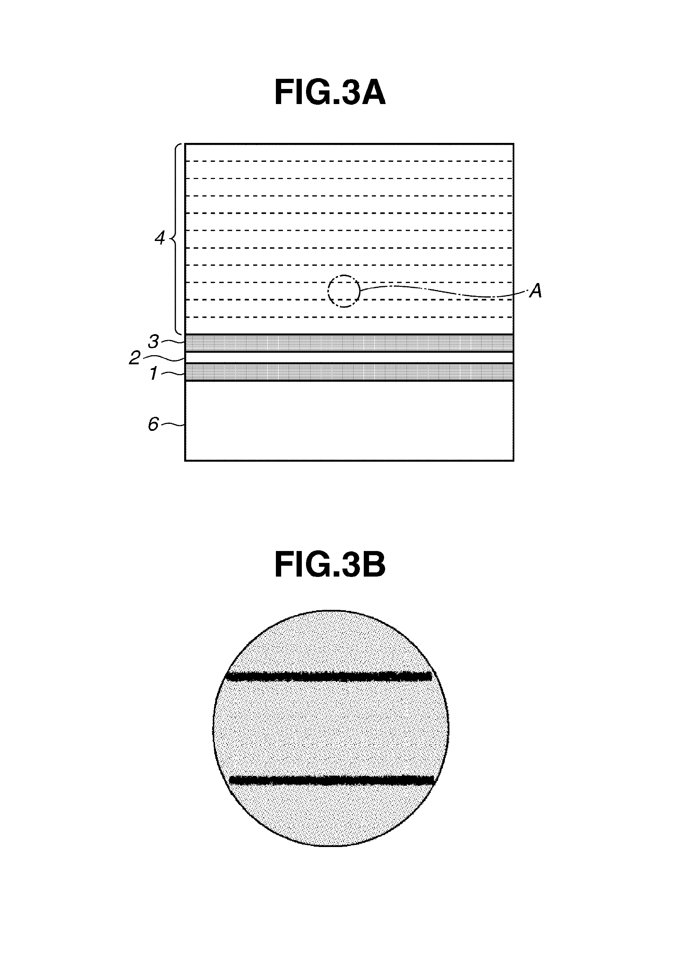

Figs. 3A and 3B schematically illustrate an image of a picture (transmission electron microscope (TEM) picture) taken by observing the black matrix according to the present invention by the TEM, specifically, a state after film formation is intermittently performed for every specific film thicknesses to form films under the same deposition conditions by sputtering during formation of the fourth film. Fig. 3A is a sectional view, and Fig. 3B is an enlarged view of an area A in the fourth film illustrated in Fig. 3A.

The intermittent film formation is described in detail below. In Fig. 1, in the fourth film 4, a film 4a is first formed with a thickness of 1.2 nanometers or more to 30 nanometers or less. After interruption of the film formation, a film 4b is formed with a thickness of 1.2 nanometers or more to 30 nanometers or less under the same conditions as those of the film 4a. The interruption period starts when no more sputter particles reach a deposition surface. The deposition and the deposition interruption are repeated by an arbitrary number of times until a predetermined film thickness is obtained, stacking thin films equal to or more than 1.2 nanometers to 30 nanometers or less and identical in composition, thereby completing the fourth film 4 including films 4a to 4g. In Fig. 1, the fourth film 4 is a multilayer film including seven layers. However, any number of layers can be formed as long as there are at least two layers. Film thicknesses can be similar or different between upper and lower films as long as a film thickness of one film is 1.2 nanometers or more to 30 nanometers or less. However, the film is better when thicker in view of a shorter deposition period. The intermittent formation of the films eliminates continuity of the films in a direction of a film thickness. The continuity of the films in the direction of the film thickness can be eliminated more surely by exposing the films to an atmosphere different from a deposition atmosphere during the deposition interruption, for example, an atmosphere such as nitrogen or air other than sputter gas or changing pressure by the same atmosphere as that of the sputter gas during the deposition interruption.

Thus, according to the present exemplary embodiment, since the continuity of the fourth film 4 in the direction of the film thickness can be eliminated, grains of the sputter film can be prevented from growing more than 30 nanometers. When the sputter film contains grains exceeding 30 nanometers, diffuse reflection caused by light scattering on a grain interface cannot be ignored. However, the intermittent formation of the films during the deposition of the fourth film 4 according to the present exemplary embodiment can provide a low diffuse reflectance ratio.

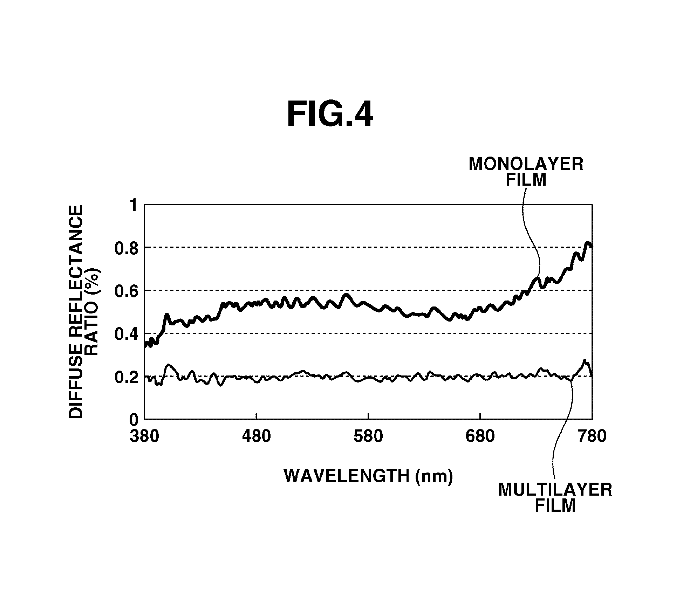

The fourth film 4 formed by the intermittent deposition method is substantially a multilayer film even when forming conditions are the same among the films. The substantial multilayer film means that all the layers of the film are identical in composition, and at least one boundary is recognized within the film when seen on the TEM picture. Such a boundary results from a change of film quality (e.g., density) from the surroundings caused by physical adsorption of gas by the intermittent deposition method. Fig. 4 illustrates an example of diffuse reflectance ratios of a black matrix using the light shielding film formed by the intermittent deposition method and a black matrix using a single light shielding film. The diffuse reflectance ratios have been measured in visible light range using an integrating sphere. As can be understood from Fig. 4, the multilayer film reduces the diffuse reflectance ratio.

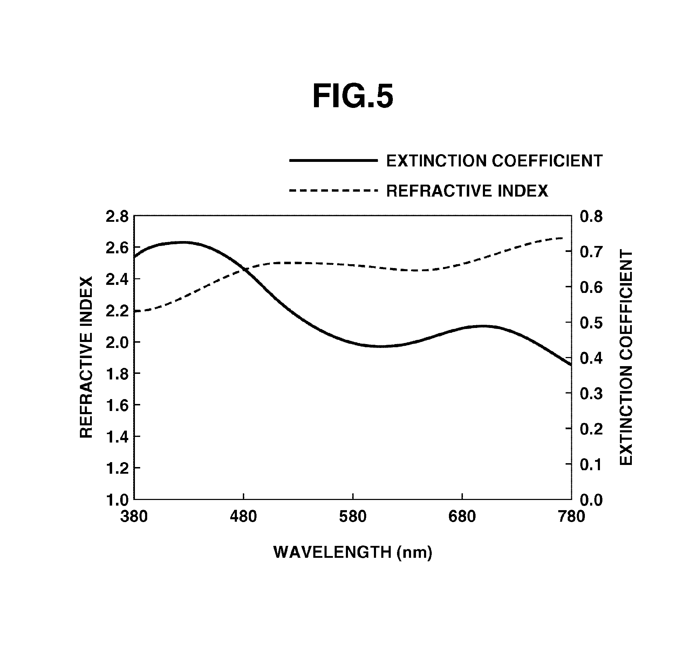

Fig. 5 illustrates examples of a refractive index and an extinction coefficient of a light shielding film containing a cobalt oxide and a silicon oxide. Light shielding performance depends on extinction coefficients. The cobalt oxide, a manganese oxide, an iron oxide, and a nickel oxide all exhibit high light shielding performance. In the case of a film thickness of 0.3 micrometers to 0.5 micrometers, a light transmittance is 5% or less, and sufficient light shielding performance is provided. Among others, the cobalt oxide or the manganese oxide should be selected. The film containing the transition metal oxide and the silicon oxide are extremely stable during thermal processing, and no deterioration occurs in optical characteristics of the black matrix even after a panel manufacturing process described below, for example, a high-temperature process such as baking of printed wiring. The optical characteristics are stable until thermal processing of a strain point 570°C of the PD200.

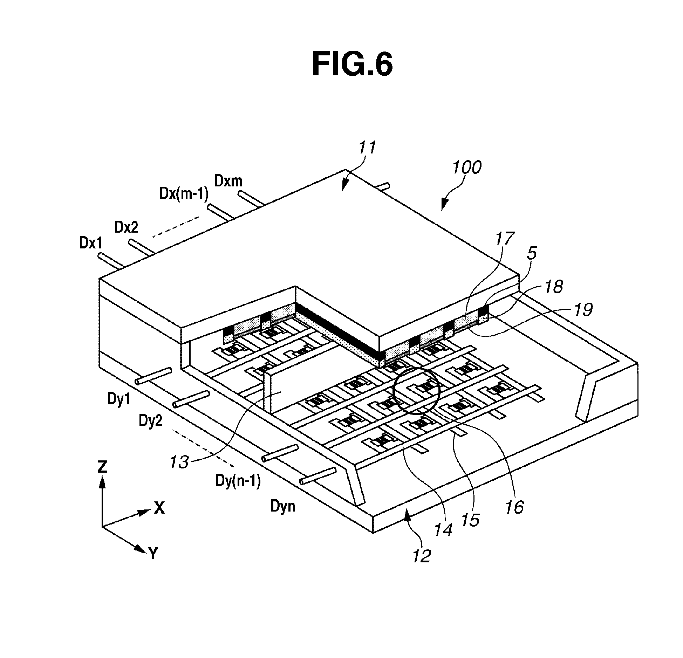

Next, an image display apparatus using the black matrix 5 is described. As the image display apparatus, an example using a surface-conduction electron-emitting device is described. However, the image display apparatus using the black matrix 5 according to the present invention is not limited to this. Fig. 6 is a partially cutout perspective view to illustrate an internal structure, providing an overall outline of an image display apparatus 100 according to an exemplary embodiment. A rear plate 12 includes a plurality of surface-conduction electron-emitting elements 16, which are connected in a matrix by scan wires 14 and information wires 15.

On a face plate 11, the black matrix 5 is formed on a substrate. Light-emitting members 17 are formed in openings of the black matrix 5. The light-emitting members 17 receive electrons emitted from the surface-conduction electron-emitting elements 16 to emit light. For the light-emitting member 17, a phosphor crystal excited by an electron beam to emit light can be used. For such a material, for example, a material described in "Phosphor Handbook" (compiled by Phosphor Research Society and published by Ohmsha, Ltd.) can be used. An anode electrode 19 overlapping the light-emitting member 17 is referred to as a metal back. Voltage is applied to the anode electrode 19 when appropriate to accelerate electrons from the rear plate 12. Al known in a cathode ray tube (CRT) is used for the metal back. A partition wall member 18 is located between the adjacent light-emitting members 17 to protrude to the rear plate 12 side more than the light-emitting member 17. The partition wall member 18 abuts on a spacer 13. The partition wall member 18 is made of a glass material containing a metal oxide such as a lead oxide, a zinc oxide, a boron oxide, an aluminum oxide, a silicon oxide, or a titanium oxide, and can be patterned using, for example, a photosensitive photo paste method. The patterned partition wall member 18 is subjected to baking at a high temperature of 500°C or more in an atmosphere.

The spacer 13 is disposed between the rear plate 12 and the face plate 11 as an atmospheric pressure resistant structure. The spacer 13 is located between the adjacent light-emitting members 17 not to affect a displayed image of the image display apparatus 100, and abuts on the face plate 11 via the partition wall member 18. The face plate 11 thus acquired is assembled facing the rear plate 12 having an electron emission source, and peripheral portions thereof are joined to constitute a vacuum container.

A high-voltage terminal applies voltage to the anode electrode 19, and simultaneously the surface-conduction electron-emitting elements 16 emit electron beams. Then, electrons collide with the light-emitting members 17, causing the light-emitting members 17 to emit light. Thus, an image can be displayed.

Next, a first exemplary embodiment is described. A first film 1 was formed with a thickness of 60 nanometers on a glass substrate of a PD200 made by ASAHI GLASS CO., LTD. , using a sintered body target A where a cobalt oxide and a silicon oxide were mixed at a ratio of 50:50 (mol%) and performing sputtering at RF power of 2.0 kilowatts and total pressure of 0.3 pascals under a mixed atmosphere of argon and oxygen. A refractive index of the first film 1 was 1.8. A second film 2 was formed with a thickness of 10 nanometers on the first film 1 using a sintered body target B where a cobalt oxide and a silicon oxide were mixed at a ratio of 90:10 (mol%) and performing sputtering at RF power of 2.0 kilowatts and total pressure of 0.3 pascals under a mixed atmosphere of argon and oxygen. A refractive index of the second film 2 was 2.5. A third film 3 was formed with a thickness of 20 nanometers on the second film 2 using a target having the same composition as the target A under the same conditions as those of the first film 1. Lastly, a fourth film 4 was formed with a thickness of 270 nanometers on the third film 3 using a target having the same composition as the target B under the same conditions as those of the second film 2. During formation of the fourth film 4, a process of interrupting the deposition at each formation of 30 nanometers and resuming the deposition after exposure of the film to a nitrogen atmosphere was repeated, thereby completing a fourth film 4 including a total of nine layers.

Film thickness variability of a black matrix 5 thus formed was measured within a surface, and variability of ±10% was found. A diffuse reflectance ratio and a specular reflectance ratio were measured. A measuring device used was SolidSpec 3700 (manufactured by SHIMADZU CORPORATION). The diffuse reflectance ratio was measured with an integrating sphere by entering measuring light to the black matrix formed on the glass from the glass side and a direction of 0° to a normal direction of the black matrix. In this case, a standard whiteboard was a reference (100%). The specular reflectance ratio was measured by entering measuring light to the black matrix formed on the glass from the glass side using absolute reflectance ratio measurement. Reflection on one surface of uncoated glass was subtracted from a spectral reflectance ratio acquired by each measurement, and a result was converted into a luminous reflectance ratio based on JIS-Z-8722. The diffuse reflectance ratio and the specular reflectance ratio were measured by the abovementioned method. The diffuse reflectance ratio was 0.2%, and the specular reflectance ratio was 0.6 to 0.9% at all places. A diffuse reflectance ratio and a specular reflectance ratio were measured after the black matrix 5 was subjected to baking at 580°C for 30 minutes. The diffuse reflectance ratio was 0.2%, and the specular reflectance ratio was 0.6 to 0.9%. Low reflectance ratio characteristics were maintained at all the places within the surface even after the baking, and a good-quality black matrix was acquired.

In a second exemplary embodiment, the target A of the first exemplary embodiment was changed to a target C where a manganese oxide and a silicon oxide were mixed at a ratio of 20:80 (mol%), and the target B of the first exemplary embodiment was changed to a target D where a manganese oxide and a silicon oxide were mixed at a ratio of 50: 50 (mol%). Other conditions were similar to those of the first exemplary embodiment, and a black matrix 5 was formed.

Film thickness variability of the black matrix 5 thus formed was measured within the surface, and variability of ±10% was found. A diffuse reflectance ratio and a specular reflectance ratio were measured by the same measuring device and the same measuring method as those of the first exemplary embodiment. The diffuse reflectance ratio was 0.2%, and the specular reflectance ratio was 0.6 to 1.0% at all places. A diffuse reflectance ratio and a specular reflectance ratio were measured by the same measuring device and the same measuring method as those of the first exemplary embodiment after the black matrix 5 was subjected to baking at 580°C for 30 minutes. The diffuse reflectance ratio was 0.2%, and the specular reflectance ratio was 0.7 to 1.0%. Low reflectance ratio characteristics were maintained at all the places within the surface even after the baking, and a good-quality black matrix was acquired.

In the third exemplary embodiment, an image display apparatus was constructed using the black matrix formed in the first exemplary embodiment. A rear plate 12 including a plurality of surface-conduction electron-emitting elements 16 was used. A face plate 11 used CRT phosphors as light-emitting members 17, and was patterned by screen printing. Then, organic components were burned down at 500°C. An Al film was used for a metal back. A partition wall member 18 used photosensitive paste mainly containing borosilicate glass, was subjected to coating, exposure and development, patterned, and then subjected to baking at 570°C. The rear plate 12 and the face plate 11 were opposed to each other via a spacer 13, and peripheral portions thereof were joined to complete an image display apparatus 100.

Voltage of 10 kilovolts was applied to anode electrodes 19 of the light-emitting members 17 of the image display apparatus 100 thus constructed. Electron beams were emitted to display an image. Thus, a good image of high contrast having no projection was acquired.

The first comparative example is a case where a black matrix includes a single layer light shielding film. In the present comparative example, a black matrix 5 was formed under the same conditions as those of the first exemplary embodiment except for the following: with the target B of the first exemplary embodiment a film thickness equal to a total film thickness of the first to fourth films of the first exemplary embodiment was deposited, and the black matrix 5 was a single film using the target B.

A diffuse reflectance ratio and a specular reflectance ratio of the black matrix 5 thus formed were measured by the same measuring device and the same measuring method as those of the first exemplary embodiment. The diffuse reflectance ratio was 0.6 to 0.8%, and the specular reflectance ratio was 0.6 to 0.9% at all places. A diffuse reflectance ratio and a specular reflectance ratio were measured by the same measuring device and the same measuring method as those of the first exemplary embodiment after the black matrix 5 was subjected to baking at 580°C for 30 minutes. The diffuse reflectance ratio was 0.6 to 0.8%, and the specular reflectance ratio was 0.6 to 0.9%. The diffuse reflectance ratios before and after the baking were larger than those of the first and second exemplary embodiments.

The second comparative example is a case where refractive indexes of first to fourth films are not optimal. In the present comparative example, a black matrix 5 was formed by not changing target composition and deposition conditions from those of the first exemplary embodiment, but the films 1 and 3 were sputtered by a sintered body target B and the films 2 and 4 were sputtered by a sintered body target A. Film thicknesses were set, to reduce a reflectance ratio and a transmittance, to 15 nanometers, 30 nanometers, 60 nanometers, and 600 nanometers in order from the film 1 based on optical calculation. The fourth film 4 was formed with a thickness of 600 nanometers including a total of 20 layers on the third film 3 using the sintered body target A and repeating a process of interrupting deposition at each formation of 30 nanometers and resuming the deposition after exposure to a nitrogen atmosphere.

Film thickness variability of the black matrix 5 thus formed was measured within the surface, and variance of ±10% was found. A diffuse reflectance ratio and a specular reflectance ratio were measured by the same measuring device and the same measuring method as those of the first exemplary embodiment. The diffuse reflectance ratio was 0.2% while the specular reflectance ratio greatly varied from 1.0 to 2.8%. A diffuse reflectance ratio and a specular reflectance ratio were measured by the same measuring device and the same measuring method as those of the first exemplary embodiment after the black matrix 5 was subjected to baking at 580**°**C for 30 minutes. The diffuse reflectance ratio was 0.2% while the specular reflectance ratio varied from 1.1 to 3.0%. As a result, a bad-quality black matrix was formed where a specular reflectance ratio greatly varied within the substrate surface.

While the present invention has been described with reference to exemplary embodiments, it is to be understood that the invention is not limited to the disclosed exemplary embodiments. The scope of the following claims is to be accorded the broadest interpretation so as to encompass all modifications, equivalent structures, and functions.
A black matrix formed on a substrate includes four layers formed by stacking a first film(1), a second film(2), a third film(3), and a fourth film(4) in this order, each film being made of a transition metal oxide and a silicon oxide. A relationship of refractive index of the first film=refractive index of the third film<refractive index of the second film=refractive index of the fourth film is set, the fourth film is a multilayer film, with each layer being identical in composition to each other, and a boundary is recognized within the fourth film when seen on a TEM picture.

## Claims

1. A black matrix formed on a substrate, comprising:
four layers formed by stacking a first film(1), a second film(2), a third film(3), and a fourth film(4) in this order, each film being made of a transition metal oxide and a silicon oxide,
wherein a relationship of refractive index of the first film=refractive index of the third film<refractive index of the second film=refractive index of the fourth film is set, the fourth film is a multilayer film, with each layer being identical in composition to each other, and a boundary is recognized within the fourth film when seen on a TEM picture.

2. The black matrix according to claim 1, wherein the fourth film is formed by stacking film layers having thicknesses of 1.2 nanometers or more to 30 nanometers or less that are identical in composition.

3. The black matrix according to claim 1 or claim 2, wherein the transition metal is one selected from cobalt, manganese, nickel, and iron.

4. The black matrix according to any one of claim 1 to claim 3, wherein the refractive index of the first film is 1.6 or more to 2.1 or less, which is smaller than that of the second film, and the refractive index of the second film is 2.1 or more.

5. A method for manufacturing the black matrix according to any one of claim 1 to claim 4, comprising:
forming the black matrix by sputtering; and
forming the fourth film by repeating deposition and deposition interruption.

6. The method according to claim 5, wherein the fourth film is formed by being exposed in an atmosphere different from a deposition atmosphere during the deposition interruption.

7. The method according to claim 5 or claim 6, wherein the black matrix is formed by sputtering in an oxygen mixed atmosphere.

8. An image display apparatus, comprising:
the black matrix according to any one of claim 1 to claim 4.
